(19) Europäisches Patentamt
European Patent Office
Office européen des brevets

(11) **EP 4 636 937 A1**

(12) **EUROPEAN PATENT APPLICATION**
published in accordance with Art. 153(4) EPC

(43) Date of publication:
**22.10.2025 Bulletin 2025/43**

(21) Application number: **23928021.7**

(22) Date of filing: **22.03.2023**

(51) International Patent Classification (IPC):
**H01M 50/531** (2021.01)   **H01M 50/533** (2021.01)
**H01M 50/534** (2021.01)   **H01M 50/536** (2021.01)

(52) Cooperative Patent Classification (CPC):
**H01M 50/531;** H01M 50/533; H01M 50/534;
H01M 50/536

(86) International application number:
**PCT/CN2023/083000**

(87) International publication number:
**WO 2024/192707 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Hong Kong (HK)**

(72) Inventors:
• **LIU, Huanji
  Ningde, Fujian 352100 (CN)**

• **SUN, Xin
  Ningde, Fujian 352100 (CN)**
• **WU, Lili
  Ningde, Fujian 352100 (CN)**
• **SONG, Peidong
  Ningde, Fujian 352100 (CN)**
• **LI, Xuan
  Ningde, Fujian 352100 (CN)**

(74) Representative: **Gong, Jinping
CocreateIP
Neumarkter Straße 21
81673 München (DE)**

(54) **BATTERY CELL, MANUFACTURING METHOD THEREFOR, BATTERY AND ELECTRIC DEVICE**

(57)    This application provides a battery cell, a manufacturing method therefor, a battery, and a power consuming apparatus. The battery cell includes an electrode plate and an adapter component. The electrode plate includes a current collector and a tab assembly, the tab assembly includes a plurality of tabs and a plurality of connecting members, the plurality of tabs are stacked in a first direction and are connected to the current collector, each of the tabs is provided with a through hole in the first direction, each of the connecting member is arranged on one side of the tab, and a tensile strength of the connecting member is less than a tensile strength of the current collector. The adapter component is connected to the plurality of connecting members through the through holes. The tensile strength of the connecting member is less than the tensile strength of the current collector. Therefore, the adapter component is connected to the plurality of connecting members through the through holes of the tabs, so that the reliability of the connection between the adapter component and the connecting members can be improved and a probability that the tab assembly cracks can be reduced, thereby improving the manufacturing yield of batteries.

FIG. 4

**Description**

**TECHNICAL FIELD**

This application relates to the field of battery technologies, and specifically to a battery cell, a manufacturing method therefor, a battery, and a power consuming apparatus.

**BACKGROUND**

Currently, batteries have become one of the indispensable energy supply apparatuses in fields such as consumer electronics, electric transportation, electric tools, and energy storage, and these fields have growing demands for batteries. Therefore, it is urgently necessary to improve the manufacturing yield of batteries to meet demands for batteries in various fields.

**SUMMARY**

This application provides a battery cell, a manufacturing method therefor, a battery, and a power consuming apparatus, which can improve the manufacturing yield of batteries.

According to a first aspect, this application provides a battery cell, including an electrode plate and an adapter component. The electrode plate includes a current collector and a tab assembly, the tab assembly includes a plurality of tabs and a plurality of connecting members, the plurality of tabs are stacked in a first direction and are connected to the current collector, each of the tabs is provided with a through hole in the first direction, each of the connecting members is arranged on at least one side of the tab, and a tensile strength of the connecting member is less than a tensile strength of the current collector. The adapter component is connected to the plurality of connecting members through the through holes.

In an electrode assembly provided in this application, the tab assembly includes the plurality of tabs and the plurality of connecting members, the connecting member is arranged on the at least one side of the tab, and the tensile strength of the connecting member is less than the tensile strength of the current collector. Therefore, the adapter component is connected to the plurality of connecting members through the through holes of the tabs, so that the reliability of the connection between the adapter component and the connecting members can be improved and a probability that the tab assembly cracks can be reduced, thereby improving the manufacturing yield of batteries.

According to any one of the foregoing embodiments of the first aspect of this application, the tensile strength of the current collector ranges from 450 MPa to 1500 MPa, and optionally ranges from 500 MPa to 800 MPa. When the tensile strength of the current collector is set within the range, the compacted density of an active material layer in the electrode plate can be increased, thereby increasing the volumetric energy density of the battery.

According to any one of the foregoing embodiments of the first aspect of this application, an elongation at break of the current collector is less than or equal to 2%, and optionally ranges from 0.4% to 1.9%. When the elongation at break of the current collector is set within the range, the occurrence of wrinkling on the electrode plate can be reduced, thereby reducing a probability that an active material in the electrode plate falls off.

According to any one of the foregoing embodiments of the first aspect of this application, a resistivity R1 of the current collector ranges from $1*10^{-3}\,\Omega/m$ to $4.5*10^{-3}\,\Omega/m$. When a resistance of the current collector is set within the range, the battery can have a suitable resistance, which helps improve the cycle performance of the battery.

According to any one of the foregoing embodiments of the first aspect of this application, a thickness d1 of the current collector ranges from 5 $\mu$m to 20 $\mu$m. When the thickness of the current collector is set within the range, the current collector can have a suitable mechanical strength, and a space for filling with the active material can be further increased, to help increase the energy density of the battery.

According to any one of the foregoing embodiments of the first aspect of this application, the tensile strength of the connecting member ranges from 150 MPa to 400 MPa. When the tensile strength of the connecting member is set within the range, the adapter component is connected to the connecting members through the through holes of the tabs, which can help reduce a probability that the connecting members crack, so that the tab assembly has a low cracking rate, and also improve the reliability of the connection between the connecting members and the adapter component, to further improve the manufacturing yield of batteries.

According to any one of the foregoing embodiments of the first aspect of this application, an elongation at break of the connecting member ranges from 3% to 10%. When the elongation at break of the connecting member is set within the range, the probability that the connecting member cracks can be further reduced, which helps reduce the cracking rate of the tab assembly, thereby helping improve the manufacturing yield of batteries.

According to any one of the foregoing embodiments of the first aspect of this application, a material of the connecting member includes one or more of aluminum, nickel, and copper. The material of the connecting member includes any one or more of the materials, which can help reduce the probability that the connecting member cracks and improve the reliability of the connection between the connecting members and the adapter component.

According to any one of the foregoing embodiments of the first aspect of this application, a resistivity R2 of the connecting member ranges from $0.1*10^{-3}$ $\Omega$/m to $2*10^{-3}$ $\Omega$/m. When a resistance of the connecting member is set within the range, a transport characteristic of electrons in the connecting members can be improved, so that the battery has good dynamic performance.

According to any one of the foregoing embodiments of the first aspect of this application, a thickness d2 of the connecting member ranges from 5 $\mu$m to 20 $\mu$m. When the thickness of the connecting member is set within the range, this can help provide the connecting member with a suitable mechanical strength, reduce the probability that the connecting member cracks, and improve the gravimetric energy density of the battery.

According to any one of the foregoing embodiments of the first aspect of this application, the electrode plate further includes an active material layer arranged on at least one side of the current collector, and a distance between the connecting member and the active material layer in a width direction of the current collector ranges from 3 mm to 10 mm. The distance between the connecting member and the active material layer is set within the range, to reduce damage caused to the active layer by the connecting member or caused when the connecting members are connected to the adapter component.

According to any one of the foregoing embodiments of the first aspect of this application, a distance between the connecting member and an end of the tab away from the active material layer is less than or equal to 5 mm. When the distance between the connecting member and the end of the tab away from the active material layer is set within the range, this can help reduce an overcurrent resistance of the connecting member, and can further improve the energy density of the battery.

According to any one of the foregoing embodiments of the first aspect of this application, the adapter component includes one or more of aluminum, nickel, and copper. This facilitates electrical connection between the connecting members and the adapter component, and further improves the reliability of the connection between the adapter component and the connecting members.

According to any one of the foregoing embodiments of the first aspect of this application, an area S1 of the connecting member, an area S2 of the tab, an area S3 of the through hole, and a contact area S4 between the adapter component and the connecting member satisfy: S4 < S3 < S1 < S2. When S1, S2, S3, and S4 satisfy the relationship, this can help improve the reliability of the connection between the adapter component and the connecting members.

According to any one of the foregoing embodiments of the first aspect of this application, an area difference S5 between an area of an overlapping part between the connecting member and the tab and the area S3 of the through hole, the connecting member, the tab, and the contact area S4 between the adapter component and the connecting member satisfy: S4 * d1 * R1/(d2 * R2 + d1 * R1) < S5 < S1, where d1 represents a thickness of the connecting member, in $\mu$m; R1 represents a resistivity of the connecting member, in m$\Omega$; d2 represents a thickness of the tab, in $\mu$m; and R2 represents a resistivity of the tab, in m$\Omega$. When S1, S4, and S5 satisfy the relationship, this can help improve an overcurrent capability of the tab assembly.

According to a second aspect, this application provides a manufacturing method for the battery cell according to the first aspect of this application, including:

providing a current collector;
opening a plurality of through holes in an edge region of the current collector at intervals, arranging a connecting member on at least one side of the edge region, and then forming a plurality of tabs and a plurality of connecting members through cutting to obtain an electrode plate, where a tensile strength of each of the connecting members is less than or equal to a tensile strength of the current collector;
winding or stacking the electrode plate to form a tab assembly; and
connecting an adapter component to the plurality of connecting members through the through holes and performing assembly, to obtain the battery cell.

According to the manufacturing method for a battery cell provided in this application, the manufacturing method can reduce the difficulty of connection between tabs, and can further reduce the occurrence of cracking caused by the connection between the tabs, thereby improving the manufacturing yield and production output of batteries.

According to any one of the foregoing embodiments of the second aspect of this application, the connecting member is connected to at least one side of each of the tabs through roller welding. The connecting member is welded to the at least one side of the tab through roller welding, which can help improve the reliability of the connection between the connecting member and the tab, and also help improve the manufacturing efficiency of batteries.

According to any one of the foregoing embodiments of the second aspect of this application, the adapter component is connected to the plurality of connecting members through ultrasonic welding. The ultrasonic welding can help electrically connect the adapter component to the plurality of connecting members in a thickness direction, and can further reduce a probability that the adapter component is separated from the connecting members.

According to a third aspect, this application provides a battery, including the battery cell according to the first aspect of this application or the battery cell manufactured using the manufacturing method according to the second aspect of this application.

According to a fourth aspect, this application further provides a power consuming apparatus, including the battery according to the third aspect of this application.

## BRIEF DESCRIPTION OF THE DRAWINGS

To describe the technical solutions in the embodiments of this application more clearly, the following briefly describes the accompanying drawings required for describing the embodiments of this application. Apparently, the accompanying drawings described below are only some embodiments of this application, and a person of ordinary skill in the art may further obtain other accompanying drawings according to the accompanying drawings without creative efforts.

FIG. 1 is a schematic top view of an electrode assembly in a battery cell according to some embodiments of this application;

FIG. 2 is a schematic diagram of an electrode plate according to some embodiments of this application shown in FIG. 1;

FIG. 3 is a schematic structural diagram of connection between electrode plates according to some embodiments of this application;

FIG. 4 is a schematic diagram of a battery cell according to some embodiments of this application;

FIG. 5 is an exploded view of the battery cell according to some embodiments of this application shown in FIG. 4;

FIG. 6 is a schematic diagram of a battery module according to some embodiments of this application;

FIG. 7 is a schematic diagram of a battery pack according to some embodiments of this application;

FIG. 8 is an exploded view of the battery pack according to some embodiments of this application shown in FIG. 7; and

FIG. 9 is a schematic diagram of a power consuming apparatus using a battery as a power source according to some embodiments of this application.

## DESCRIPTION OF REFERENCE SIGNS

1-battery pack, 2-upper box, 3-lower box, 4-battery module, 5-battery cell, 51-housing, 52-electrode assembly, 521-electrode plate, 5211-current collector, 5212-tab assembly, 5212a-tab, 5212b-through hole, 5212c-connecting member, 5512d-ultrasonic welding region, 522-adapter component, and 53-cover plate.

## DETAILED DESCRIPTION

Embodiments of a current collector, a manufacturing method for same, an electrode plate, an electrode assembly, a battery, and a power consuming apparatus of this application are specifically disclosed in detail below and appropriately described with reference to the accompanying drawings. However, there will be cases where unnecessary detailed descriptions are omitted. For example, there are cases where detailed descriptions of well-known matters and repeated descriptions of actually identical structures are omitted. This is to avoid unnecessary redundancy in the following descriptions and to facilitate the understanding by a person skilled in the art. In addition, the accompanying drawings and the following descriptions are provided for a person skilled in the art to fully understand this application and are not intended to limit the subject matter recorded in the claims.

A "range" disclosed in this application is defined in a form of a lower limit and an upper limit, and a given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if a range of 60 to 120 and a range of 80 to 110 are listed for a specific parameter, it is understood that a range of 60 to 110 and a range of 80 to 120 are also contemplated. Additionally, if minimum range values of 1 and 2 are listed and maximum range values of 3, 4, and 5 are listed, the following ranges may all be contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a and b, where both a and b are real numbers. For example, a numerical range "0 to 5" indicates that all real numbers between "0 to 5" have been listed herein, and "0 to 5" is only an abbreviated representation of a combination of these numerical values. In addition, when a parameter is expressed as an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of this application may be combined to form a new technical solution. In addition, the technical solution shall be included in the disclosed content of this application.

Unless otherwise specified, all technical features and optional technical features of this application may be combined to form a new technical solution. In addition, the technical solution shall be included in the disclosed content of this application.

Unless otherwise specified, all steps of this application may be performed sequentially or randomly, and preferably sequentially. For example, the phrase "the method includes step (a) and step (b)" indicates that the method may include step (a) and step (b) performed sequentially, or the method may include step (b) and step (a) performed sequentially. For example, the phrase "the method may further include step (c)" indicates that step (c) may be added to the method in any order. For example, the method may include step (a), step (b), and step (c), may include step (a), step (c), and step (b), or may include step (c), step (a), and step (b).

Unless otherwise specified, the terms such as "include", "comprise", and their variants mentioned in this application may be open-ended or closed-ended. For example, the terms such as "include", "comprise", and their variants may indicate that other components not listed may be further included or comprised, or only the listed components may be included or comprised.

Unless otherwise specified, the term "or" is inclusive in this application. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

In this application, the terms "first", "second" and the like are only used for descriptive purposes, and should not be interpreted as indicating or implying relative importance.

In this application, the term "a plurality of" means two or more.

Unless otherwise specified, terms used in this application have well-known meanings generally understood by a person skilled in the art.

Unless otherwise specified, numerical values of parameters mentioned in this application may be tested by using various test methods commonly used in the art, for example, testing may be performed according to a test method provided in the embodiments of this application.

In this application, a battery is a single physical module including one or more battery cells to provide a higher voltage and capacity. For example, the battery mentioned in this application may include a battery module, a battery pack, or the like. The battery typically includes a box for enclosing one or more battery cells. The box can prevent liquid or other foreign objects from affecting charging or discharging of the battery cell.

The battery cell may include a lithium-ion secondary battery cell, a lithium-ion primary battery cell, a lithium-sulfur battery cell, a sodium-ion battery cell, a magnesium-ion battery cell, and the like, which are not limited in the embodiments of this application. The battery cell may be cylindrical, flat, cuboid or in another shape, which is not limited in the embodiments of this application. The battery cell is generally divided into three types: a cylindrical battery cell, a square battery cell, and a pouch battery cell, which are not limited in the embodiments of this application.

The battery cell usually includes an electrode assembly, and the electrode assembly is an assembly in which electrochemical reactions occur in the battery cell. The electrode assembly mainly includes a positive electrode plate and a negative electrode plate that are wound or stacked, and a separator is usually arranged between the positive electrode plate and the negative electrode plate. Parts of the positive electrode plate and the negative electrode plate that have active materials constitute a main body part of the electrode assembly, and parts of the positive electrode plate and the negative electrode plate that do not have the active materials respectively constitute a positive electrode tab and a negative electrode tab. The positive electrode tab and the negative electrode tab may both be located at an end of the main body part or may be respectively located at two ends of the main body part. During charging and discharging of the battery, a positive electrode active material and the negative electrode active material react with an electrolyte, and the tabs are connected to electrode terminals to form a current loop.

In the related art, the parts of the positive electrode plate and the negative electrode plate that do not have the active materials are usually connected through welding to respectively form the positive electrode tab and the negative electrode tab. However, during welding, the reliability of the connection between the parts of the positive electrode plate and the negative electrode plate that do not have the active materials is low, cracking may also occur, and as a result the manufacturing yield of batteries is not high.

In view of this, the embodiments of this application provide a battery cell, a manufacturing method therefor, a battery, and a power consuming apparatus, which can improve the manufacturing yield of batteries.

## Battery cell

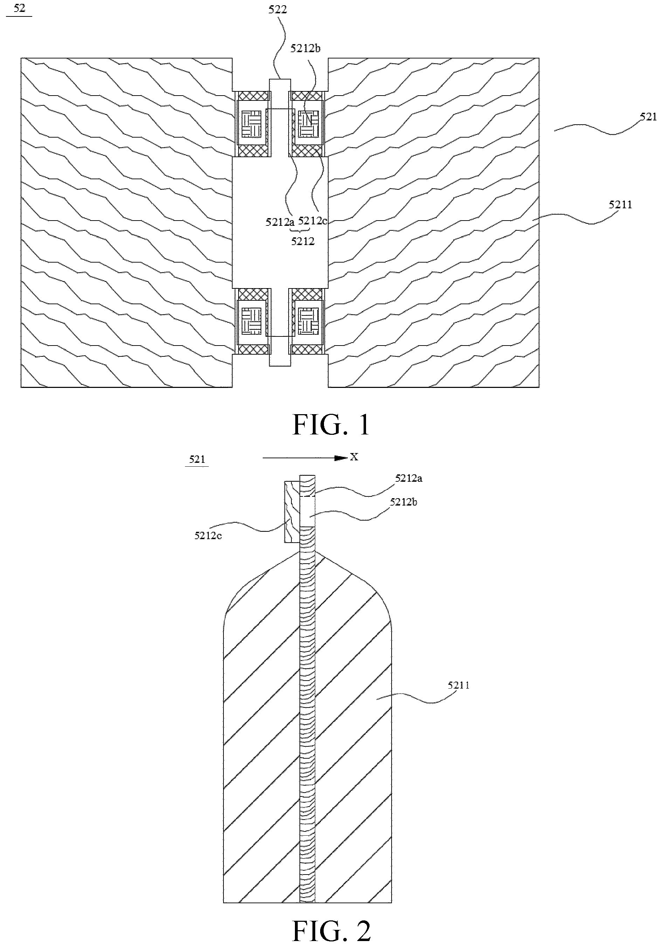

Referring to FIG. 1 to FIG. 3, an embodiment of this application provides a battery cell, including an electrode plate 521 and an adapter component 522. The electrode plate 521 includes a current collector 5211 and a tab assembly 5212. The tab assembly 5212 includes a plurality of tabs 5212a and a plurality of connecting members 5212c. The plurality of tabs 5212a are stacked in a first direction X and are connected to the current collector 5211. Each of the tabs 5212a is provided with a through hole 5212b in the first direction X. Each of the connecting members 5212c is arranged on at least one side of the tab 5212a. A tensile strength of the connecting member 5212c is less than a tensile strength of the current collector 5211. The adapter component 522 is connected to the plurality of connecting members 5212c through the through holes 5212b.

In the battery cell provided in this application, the tab assembly 5212 includes the plurality of tabs 5212a and the plurality of connecting members 5212c. The connecting member 5212c is arranged on the at least one side of the tab 5212a, and the tensile strength of the connecting member 5212c is less than the tensile strength of the current collector 5211. Therefore, the adapter component 522 is electrically connected to the plurality of connecting members 5212c through the through holes 5212b of the tabs 5212a, to electrically connect the plurality of tabs 5212a, so that the reliability of the connection between the adapter component 522 and the connecting members 5212c can be improved and a probability that the tab assembly 5212 cracks can be reduced, thereby improving the manufacturing yield of batteries.

In addition, when the adapter component 522 is electrically connected to the plurality of connecting members 5212c through the through holes 5212b of the tabs 5212a, an increase in a height of the tab assembly 5212 is small, so that the battery can have high volumetric energy density.

In the foregoing embodiments, when some physical properties (for example, the tensile strength, an elongation at break, and a resistivity) of the current collector 5211 are within suitable ranges, this can help improve the electrochemical performance, for example, the energy density and cycle performance, of the battery.

In some embodiments of this application, the current collector 5211 may include one or more of stainless steel or a nickel-iron alloy. These high-strength substrates can improve the compacted density of an active material layer in the electrode plate 521, to help improve the volumetric energy density of the battery.

In this application, the compacted density is the total mass of all materials (including active materials and auxiliary materials such as a conductive agent and a binder) forming the active material layer per unit volume.

In some embodiments of this application, a material of the tab 5212a is the same as a material of the current collector 5211. In this way, the current collector 5211 may be directly processed to form the tab 5212a connected to the current collector 5211, thereby improving the manufacturing efficiency of the battery.

In some embodiments of this application, the tensile strength of the current collector 5211 ranges from 450 MPa to 1500 MPa, and optionally ranges from 500 MPa to 800 MPa. When the tensile strength of the current collector 5211 is set within the range, the compacted density of the active material layer in the electrode plate 521 can be increased, thereby increasing the volumetric energy density of the battery.

In this application, the tensile strength of the current collector 5211 has a meaning well-known in the art, and may be tested by using a method and an instrument known in the art. For example, a sample with a length of 100 mm and a width of 15 mm is obtained, with an accuracy of 0.05 mm. The sample is symmetrically secured between upper and lower clamping fixtures of a measuring tool. The upper and lower clamping fixtures are spaced by 50 mm. The measuring tool is activated and maintained at $(5 \pm 1)$ mm/min, and is loaded at a constant speed. A maximum load of the sample during a shear failure is recorded. A tensile strength $\sigma t$ of the sample is subsequently calculated according to the following formula:

$$\sigma t = P/(b * d).$$

P is the maximum load (N), b is the width (mm) of the sample, and d is a thickness of the sample.

In some examples, the tensile strength of the current collector 5211 may be, but is not limited to, 450 MPa, 500 MPa, 550 MPa, 600 MPa, 650 MPa, 700 MPa, 750 MPa, 800 MPa, 850 MPa, 900 MPa, 950 MPa, 1000 MPa, 1050 MPa, 1100 MPa, 1150 MPa, 1200 MPa, 1250 MPa, 1300 MPa, 1350 MPa, 400 MPa, 1450 MPa, 1500 MPa, or a range formed by any two of the values. For example, a value range of the tensile strength of the current collector 5211 may be, but is not limited to, 450 MPa to 1450 MPa, 550 MPa to 1350 MPa, 600 MPa to 1250 MPa, or 700 MPa to 1100 MPa.

In some embodiments of this application, an elongation at break of the current collector 5211 is less than or equal to 2%, and optionally ranges from 0.4% to 1.9%. When the elongation at break of the current collector 5211 is set within the range, the occurrence of wrinkling on the electrode plate 521 can be reduced, and a probability that an active material in the electrode plate falls off 521 can be further reduced, thereby improving the cycle performance of the battery.

In this application, the elongation at break of the current collector 5211 has a meaning well-known in the art and may be tested by using a method and an instrument known in the art. For example, a sample with a length of 100 mm and a width of 15 mm is obtained, with an accuracy of 0.05 mm. The sample is symmetrically secured between upper and lower clamping fixtures of a measuring tool. The upper and lower clamping fixtures are spaced by 50 mm. The measuring tool is activated and maintained at (5 ± 1) mm/min, and is loaded at a constant speed. A gap m between the upper and lower clamping fixtures when the sample is broken is recorded. An elongation at break = (m - 50)/50 * 100%.

In some examples, the elongation at break of the current collector 5211 may be, but is not limited to, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, or a range formed by any two of the values. For example, a value range of the elongation at break of the current collector 5211 may be, but is not limited to, 0.5% to 1.8%, 0.7% to 1.6%, or 0.9% to 1.4%.

In some embodiments of this application, a resistivity R1 of the current collector 5211 ranges from $1*10^{-3}$ Ω/m to $4.5*10^{-3}$ Ω/m. When a resistance of the current collector 5211 is set within the range, the battery can have a suitable resistance, which helps improve the cycle performance of the battery.

In this application, the resistance of the current collector 5211 has a meaning well-known in the art and may be tested by using a method and an instrument known in the art. For example, a four-probe resistance meter is used, where a distance between probes is 1 mm, a size of a sample is 100 mm*100 mm, a tested location is a middle portion of the sample, and a resistivity of the sample = an instrument display value/a thickness of the sample.

In some examples, the resistivity R1 of the current collector 5211 may be, but is not limited to, $1*10^{-3}$ Ω/m, $1.1*10^{-3}$ Ω/m, $1.2*10^{-3}$ Ω/m, $1.3*10^{-3}$ Ω/m, $1.4*10^{-3}$ Ω/m, $1.5*10^{-3}$ Ω/m, $1.6*10^{-3}$ Ω/m, $1.7*10^{-3}$ Ω/m, $1.8*10^{-3}$ Ω/m, $1.9*10^{-3}$ Ω/m, $2.0*10^{-3}$ Ω/m, $2.1*10^{-3}$ Ω/m, $2.2*10^{-3}$ Ω/m, $2.3*10^{-3}$ Ω/m, $2.4*10^{-3}$ Ω/m, $2.5*10^{-3}$ Ω/m, $2.6*10^{-3}$ Ω/m, $2.7*10^{-3}$ Ω/m, $2.8*10^{-3}$ Ω/m, $2.9*10^{-3}$ Ω/m, $3.0*10^{-3}$ Ω/m, $3.1*10^{-3}$ Ω/m, $3.2*10^{-3}$ Ω/m, $3.3*10^{-3}$ Ω/m, $3.4*10^{-3}$ Ω/m, $3.5*10^{-3}$ Ω/m, $3.6*10^{-3}$ Ω/m, $3.7*10^{-3}$ Ω/m, $3.8*10^{-3}$ Ω/m, $3.9*10^{-3}$ v, $4.0*10^{-3}$ Ω/m, $4.1*10^{-3}$ Ω/m, $4.2*10^{-3}$ Ω/m, $4.3*10^{-3}$ Ω/m, $4.4*10^{-3}$ Ω/m, $4.5*10^{-3}$ Ω/m, or a range formed by any two of the values. For example, a value range of the resistivity R1 of the current collector 5211 may be, but is not limited to, $1.1*10^{-3}$ Ω/m to $4.3*10^{-3}$ Ω/m, $1.5*10^{-3}$ Ω/m to $4.0*10^{-3}$ Ω/m, $1.8*10^{-3}$ Ω/m to $3.6*10^{-3}$ Ω/m, or $2*10^{-3}$ Ω/m to $*10^{-3}$ Ω/m.

In addition, a thickness d1 of the current collector 5211 is within a suitable range, so that the current collector 5211 can have a suitable mechanical strength, and the electrode assembly can have a large space for filling with the active material, to improve the energy density of the battery.

In some embodiments of this application, the thickness d1 of the current collector 5211 ranges from 5 μm to 20 μm. When the thickness of the current collector 5211 is set within the range, the current collector 5211 can have the suitable mechanical strength, and a space for filling with the active material can be further increased, to help improve the energy density of the battery.

In this application, the thickness of the current collector 5211 has a meaning well-known in the art and may be tested by using a method and an instrument known in the art. For example, a ten-thousandth micrometer (for example, Mitutoyo 293-100 with an accuracy of 0.1 μm) is used.

In this embodiment of this application, that the connecting member 5212c is arranged on the at least one side of the tab 5212a may be understood as that the tab 5212a has two opposite sides, the connecting member 5212c may be arranged on any one side of the tabs 5212a, or may be respectively arranged on two sides of the tab 5212a.

In addition, when some physical properties (for example, the tensile strength, an elongation at break, and a resistivity) of the connecting members 5212c are within suitable ranges, this can help improve the reliability of the connection between the connecting members 5212c and the adapter component 522, and reduce the probability that the tab assembly 5212 cracks, to improve the manufacturing yield of batteries.

In some embodiments of this application, the tensile strength of the connecting member 5212c ranges from 150 MPa to 400 MPa. When the tensile strength of the connecting member 5212c is set within the range, the adapter component 522 is connected to the connecting members 5212c through the through holes 5212b of the tabs 5212a, which can help reduce a probability that the connecting members 5212c crack, so that the tab assembly 5212 has a low cracking rate, and also improve the reliability of the connection between the connecting members 5212c and the adapter component 522, to further improve the manufacturing yield of batteries.

In this application, the tensile strength of the connecting member 5212c has a meaning well-known in the art, and may be tested by using a method and an instrument known in the art. For example, a sample with a length of 100 mm and a width of 15 mm is obtained, with an accuracy of 0.05 mm. The sample is symmetrically secured between upper and lower clamping fixtures of a measuring tool. The upper and lower clamping fixtures are spaced by 50 mm. The measuring tool is activated and maintained at (5 ± 1) mm/min, and is loaded at a constant speed. A maximum load of the sample during a shear failure is recorded. A tensile strength σt of the sample is subsequently calculated according to the following formula:

$$\sigma t = P/(b * d).$$

P is the maximum load (N), b is the width (mm) of the sample, and d is a thickness of the sample.

In some examples, the tensile strength of the connecting member 5212c may be, but is not limited to, 150 MPa, 160 MPa, 170 MPa, 180 MPa, 190 MPa, 200 MPa, 210 MPa, 220 MPa, 230 MPa, 240 MPa, 250 MPa, 260 MPa, 270 MPa, 280 MPa, 290 MPa, 300 MPa, 310 MPa, 320 MPa, 330 MPa, 340 MPa, 350 MPa, 360 MPa, 370 MPa, 380 MPa, 390 MPa, 400 MPa, or a range formed by any two of the values. For example, a value range of the tensile strength of the connecting member 5212c may be, but is not limited to, 160 MPa to 380 MPa, 180 MPa to 340 MPa, 200 MPa to 300 MPa, or 220 MPa to 280 MPa.

In some embodiments of this application, an elongation at break of the connecting member 5212c ranges from 3% to 10%. When the elongation at break of the connecting member 5212c is set within the range, the probability that the connecting member 5212c cracks can be further reduced, which helps reduce the cracking rate of the tab assembly 5212, thereby helping improve the manufacturing yield of batteries.

In this application, the elongation at break of the connecting member 5212c has a meaning well-known in the art and may be tested by using a method and an instrument known in the art. For example, a sample with a length of 100 mm and a width of 15 mm is obtained, with an accuracy of 0.05 mm. The sample is symmetrically secured between upper and lower clamping fixtures of a measuring tool. The upper and lower clamping fixtures are spaced by 50 mm. The measuring tool is activated and maintained at $(5 \pm 1)$ mm/min, and is loaded at a constant speed. A gap m between the upper and lower clamping fixtures when the sample is broken is recorded. An elongation at break = (m - 50)/50 * 100%.

In some examples, the elongation at break of the connecting member 5212c may be, but is not limited to, 3%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, 5.1%, 5.2%, 5.3%, 5.4%, 5.5%, 5.6%, 5.7%, 5.8%, 5.9%, 6.0%, 6.1%, 6.2%, 6.3%, 6.4%, 6.5%, 6.6%, 6.7%, 6.8%, 6.9%, 7.0%, 7.1%, 7.2%, 7.3%, 7.4%, 7.5%, 7.6%, 7.7%, 7.8%, 7.9%, 8.0%, 8.1%, 8.2%, 8.3%, 8.4%, 8.5%, 8.6%, 8.7%, 8.8%, 8.9%, 9.0%, 9.1%, 9.2%, 9.3%, 9.4%, 9.5%, 9.6%, 9.7%, 9.8%, 9.9%, 10%, or a range formed by any two of the values. For example, a formed range of the elongation at break of the connecting member 5212c may be, but is not limited to, 3.1% to 9.8%, 3.6% to 9.4%, 4% to 8.9%, 4.3% to 8.4%, 4.0% to 8.0%, 4.3% to 7.8%, or 4.5% to 7.2%.

In the foregoing embodiments, the current collector 5211 can improve the compacted density of the active material layer in the electrode plate 521, to help improve the volumetric energy density of the battery. However, when a high-strength substrate is used as the tab 5212a, the high-strength substrate of the tab 5212a is prone to a crack during connection, and the reliability of the connection is low, that is, the tab 5212a is prone to fracture, which is not beneficial to improving the manufacturing yield of batteries. Therefore, in this application, the connecting member 5212c is arranged on one side of the tab 5212a, and the tensile strength of the connecting member 5212c is less than the tensile strength of the current collector 5211. In addition, the adapter component 522 is electrically connected to the connecting members 5212c through the through holes 5212b of the tabs 5212a. In this way, the probability that the tab assembly 5212 cracks can be reduced, and the reliability of the connection between the adapter component 522 and the connecting members 5212c can be improved. Therefore, in this application, the connecting members 5212c include suitable materials, so as to further improve the manufacturing yield of batteries.

In some embodiments of this application, a material of the connecting member 5212c includes one or more of aluminum, nickel, and copper. The material of the connecting member 5212c includes any one or more of the materials, which can help reduce the probability that the connecting member 5212c cracks and improve the reliability of the connection between the connecting members 5212c and the adapter component 522.

In some embodiments of this application, a resistivity R2 of the connecting member 5212c ranges from $0.1*10^{-3}$ $\Omega$/m to $2*10^{-3}$ $\Omega$/m. When a resistance of the connecting member 5212c is set within the range, a transport characteristic of electrons in the connecting members 5212c can be improved, so that the battery has good dynamic performance.

In this application, the resistivity of the connecting members 5212c has a meaning well-known in the art and may be tested by using a method and an instrument known in the art. For example, a four-probe resistance meter is used, where a distance between probes is 1 mm, a size of a sample is 100 mm*100 mm, a tested location is a middle portion of the sample, and a resistivity of the sample = an instrument display value/a thickness of the sample.

In some examples, the resistivity R2 of the connecting members 5212c is $0.1*10^{-3}$ $\Omega$/m, $0.2*10^{-3}$ $\Omega$/m, $0.3*10^{-3}$ $\Omega$/m, $0.4*10^{-3}$ $\Omega$/m, $0.5*10^{-3}$ $\Omega$/m, $0.6*10^{-3}$ $\Omega$/m, $0.7*10^{-3}$ $\Omega$/m, $0.8*10^{-3}$ $\Omega$/m, $0.9*10^{-3}$ $\Omega$/m, $1.0*10^{-3}$ $\Omega$/m, $1.1*10^{-3}$ $\Omega$/m, $1.2*10^{-3}$ $\Omega$/m, $1.3*10^{-3}$ $\Omega$/m, $1.4*10^{-3}$ $\Omega$/m, $1.5*10^{-3}$ $\Omega$/m, $1.6*10^{-3}$ $\Omega$/m, $1.7*10^{-3}$ $\Omega$/m, $1.8*10^{-3}$ $\Omega$/m, $1.9*10^{-3}$ $\Omega$/m, $2.0*10^{-3}$ $\Omega$/m, or a range formed by any two of the values. For example, a value range of the resistivity R2 of the connecting members 5212c may be, but is not limited to, $0.2*10^{-3}$ $\Omega$/m to $1.8*10^{-3}$ $\Omega$/m, or $0.5*10^{-3}$ $\Omega$/m to $1.5*10^{-3}$ $\Omega$/m.

In some embodiments of this application, a thickness d1 of the connecting members 5212c ranges from 5 $\mu$m to 20 $\mu$m. When the thickness of the connecting member 5212c is set within the range, this can help provide the connecting member 5212c with a suitable mechanical strength, reduce the probability that the connecting member 5212c cracks, and improve the gravimetric energy density of the battery.

In this application, the thickness of the connecting member 5212c has a meaning well-known in the art and may be tested by using a method and an instrument known in the art. For example, a ten-thousandth micrometer (for example, Mitutoyo 293-100 with an accuracy of 0.1 $\mu$m) is used.

In some examples, the thickness d1 of the connecting members 5212c may be, but is not limited to, 5 $\mu$m, 5.5 $\mu$m,

6 $\mu$m, 6.5 $\mu$m, 7 $\mu$m, 7.5 $\mu$m, 8 $\mu$m, 8.5 $\mu$m, 9 $\mu$m, 9.5 $\mu$m, 10 $\mu$m, 10.5 $\mu$m, 11 $\mu$m, 11.5 $\mu$m, 12 pm, 12.5 $\mu$m, 13 $\mu$m, 13.5 $\mu$m, 14 $\mu$m, 14.5 $\mu$m, 15 $\mu$m, 15.5 $\mu$m, 16 $\mu$m, 16.5 $\mu$m, 17 $\mu$m, 17.5 $\mu$m, 18 $\mu$m, 18.5 $\mu$m, 19 $\mu$m, 19.5 $\mu$m, 20 $\mu$m, or a range formed by any two of the values. For example, a value range of the thickness d1 of the connecting members 5212c may be, but is not limited to, 5.5 $\mu$m to 19 $\mu$m, 7 $\mu$m to 17 $\mu$m, or 9 $\mu$m to 15 $\mu$m.

In some embodiments of this application, the electrode plate 521 further includes an active material layer arranged on one side of the current collector 5211, and a distance between the connecting member 5212c and the active material layer ranges from 3 mm to 10 mm. The distance between the connecting member 5212c and the active material layer is set within the range, to reduce damage caused to the active layer by the connecting member 5212c or caused when the connecting members 5212c are connected to the adapter component 522.

In this application, the distance between the connecting member 5212c and the active material layer is a distance between edges of the connecting members 5212c and the active material layer that are opposite to each other, and may be tested by using an instrument and a method known in the art, for example, may be directly tested by using a ruler or a film ruler, with an accuracy being less than or equal to 0.5 mm.

In some embodiments of this application, a distance between the connecting member 5212c and an end of the tab 5212a away from the active material layer is less than or equal to 5 mm. When the distance between the connecting member 5212c and the end of the tab 5212a away from the active material layer is set within the range, this can help reduce an overcurrent area of the connecting member 5212c, and can further improve the energy density of the battery.

In this application, that the distance between the connecting member 5212c and the end of the tab 5212a away from the active material layer is less than or equal to 5 mm may be understood as that, the connecting member 5212c does not extend from the tab 5212a, and the distance between the connecting member 5212c and the end of the tab 5212a away from the active material layer is less than or equal to 5 mm, or the connecting member 5212c extends from the tabs 5212a, and the distance between the connecting member 5212c and the end of the tab 5212a away from the active material layer is less than or equal to 5 mm.

In some embodiments of this application, the adapter component 522 includes one or more of aluminum, nickel, and copper. This facilitates electrical connection between the connecting members 5212c and the adapter component, and further improves the reliability of the connection between the adapter component 522 and the connecting members 5212c.

In some embodiments of this application, an area S1 of the connecting member 5212c, an area S2 of the tab 5212a, an area S3 of the through hole 5212b, and a contact area S4 between the adapter component 522 and the connecting member 5212c satisfy: S4 < S3 < S1 < S2. When S1, S2, S3, and S4 satisfy the relationship, this can help improve the reliability of the connection between the adapter component 522 and the connecting members 5212c.

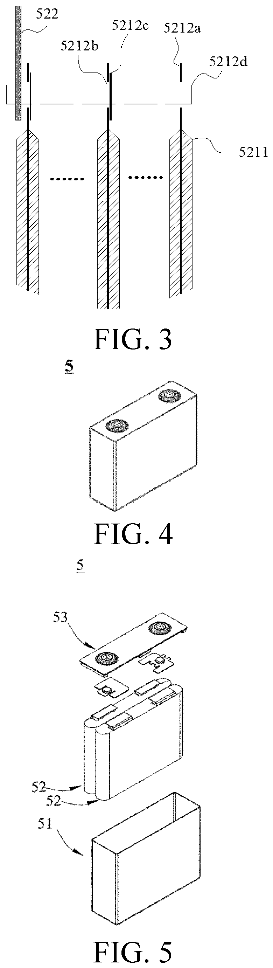

In this application, the area S1 of the connecting member 5212c, the area S2 of the tab 5212a, the area S3 of the through hole 5212b, and the contact area S4 (namely, an ultrasonic welding region 5212d in FIG. 3) between the adapter component 522 and the connecting member 5212c all refer to surface areas, and may be separately tested by using methods and instruments known in the art. For example, a regular quadrangle may be directly measured and calculated by using a ruler, and an irregular welding mark may be measured by using a two-dimensional frame selection shape.

To improve an overcurrent capability of the tabs 5212a, in some embodiments of this application, an area difference S5 between an area of an overlapping part between the connecting member 5212c and the tab 5212a and the area S3 of the through hole 5212b, the connecting members 5212c, the tabs 5212a, and the contact area S4 between the adapter component 522 and the connecting member 5212c satisfy: S4 * d1 * R1/(d2 * R2 + d1 * R1) < S5 < S1, where d1 represents a thickness of the connecting member 5212c, in $\mu$m. R1 represents a resistivity of the connecting member 5212c, in m$\Omega$. d2 represents a thickness of the tab 5212a, in $\mu$m. R2 represents a resistivity of the tab 5212a, in m$\Omega$. In the foregoing embodiments, when S1, S4, and S5 satisfy the relationship, this can help improve an overcurrent capability of the tab assembly 5212.

In some embodiments of this application, a quantity of layers obtained by winding or stacking the current collector 5211 in the electrode assembly is N, a quantity of layers of the connecting members 5212c in the tab assembly 5212 is n, and N and n satisfy: N - 1 $\le$ n $\le$ N + 1.

In the embodiments of this application, a shape of the through hole 5212b of the tab 5212a is not specifically limited. For example, the shape of the through hole 5212b may be a circle, a square, or the like.

In addition, in the embodiments of this application, the electrode plate 521 may be one of a positive electrode plate and a negative electrode plate. For ease of describing the electrode plate 521 in the embodiments of this application in detail, the following embodiments are described by using an example in which the electrode plate 521 is a negative electrode plate.

In some embodiments of this application, the positive electrode plate usually includes a positive electrode current collector and a positive electrode active material layer that is arranged on one side of the positive electrode current collector and that includes a positive electrode active material.

In some embodiments, the positive electrode current collector has two opposite surfaces in a thickness direction of the positive electrode current collector, and the positive electrode active material layer is arranged on either or both of the two opposite surfaces of the positive electrode current collector.

In some embodiments of this application, the positive electrode current collector includes a metal foil or a composite current collector. For example, the metal foil may include an aluminum foil, and the composite current collector may include a polymer material substrate layer and a metal layer formed on at least one surface of the polymer material substrate layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments of this application, the positive electrode active material may be a positive electrode active material used for a battery and well-known in the art. For example, the positive electrode active material may include one or more of lithium-containing phosphate of an olivine structure, a lithium transition metal oxide, and respective modified compounds thereof. However, the embodiments of this application are not limited to such materials, and other conventional materials that can be used as positive electrode active materials for the battery may alternatively be used. One of these positive electrode active materials may be used alone or two or more of these positive electrode active materials may be combined for use. Examples of the lithium transition metal oxide may include, but are not limited to, at least one of a lithium cobalt oxide (for example, $LiCoO_2$), a lithium nickel oxide (for example, $LiNiO_2$), a lithium manganese oxide (for example, $LiMnO_2$ or $LiMn_2O_4$), a lithium nickel cobalt oxide, a lithium manganese cobalt oxide, a lithium nickel manganese oxide, a lithium nickel cobalt manganese oxide (for example, $LiNi_{1/3}Co_{1/3}Mn_{1/3}O_2$ (may also be referred to as NCM333 for short), $LiNi_{0.5}Co_{0.2}Mn_{0.3}O_2$ (may also be referred to as NCM523 for short), $LiNi_{0.5}Co_{0.25}Mn_{0.25}O_2$ (may also be referred to as NCM211 for short), $LiNi_{0.6}Co_{0.2}Mn_{0.2}O_2$ (may also be referred to as NCM622 for short), or $LiNi_{0.8}Co_{0.1}Mn_{0.1}O_2$ (may also be referred to as NCM811 for short)), a lithium nickel cobalt aluminum oxide (for example, $LiNi_{0.85}Co_{0.15}Al_{0.05}O_2$), and a modified compound thereof. Examples of the lithium-containing phosphate of the olivine structure may include, but are not limited to, one or more of lithium iron phosphate (for example, $LiFePO_4$ (which may also be referred to as LFP for short)), a composite material of the lithium iron phosphate and carbon, lithium manganese phosphate (for example, $LiMnPO_4$), a composite material of the lithium manganese phosphate and carbon, lithium iron manganese phosphate, and a composite material of the lithium manganese iron phosphate and carbon.

In some embodiments of this application, the positive electrode active material layer further optionally includes a binder. For example, the binder may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments of this application, the positive electrode active material layer further optionally includes a conductive agent. For example, the conductive agent may include one or more of superconducting carbon, acetylene black, carbon black, Ketjen black, carbon dots, carbon nanotubes, graphene, and carbon nanofibers.

In some embodiments of this application, the positive electrode plate may be manufactured by: dispersing the foregoing components for manufacturing the positive electrode plate, for example, the positive electrode active material, the conductive agent, the binder, and any other components, in a solvent (for example, N-methyl pyrrolidone) to form a positive electrode slurry; and coating the positive electrode slurry on the positive electrode current collector, followed by drying, cold pressing, and other procedures, to obtain the positive electrode plate.

In some embodiments of this application, a negative electrode plate is the electrode plate 521 in the foregoing embodiments.

In some embodiments of this application, a negative electrode active material layer is arranged on at least one side of a negative electrode current collector, the negative electrode active material layer includes a negative electrode active material, and the negative electrode active material may be a negative electrode active material used for a battery and well-known in the art. For example, the negative electrode active material may include one or more of artificial graphite, natural graphite, soft carbon, hard carbon, a silicon-based material, a tin-based material, and lithium titanate. The silicon-based material may include one or more of elemental silicon, a silicon oxide, a silicon-carbon composite, a silicon-nitrogen composite, and a silicon alloy. The tin-based material may include one or more of elemental tin, a tin oxide, and a tin alloy. However, this application is not limited to these materials, and other conventional materials that can be used as the negative electrode active material for a battery may alternatively be used. One of these negative electrode active materials may be used alone or two or more of these negative electrode active materials may be combined for use.

In some embodiments of this application, the negative electrode active material layer further optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments of this application, the negative electrode active material layer further optionally includes a conductive agent. The conductive agent may include one or more of superconducting carbon, acetylene black, carbon black, Ketjen black, carbon dots, carbon nanotubes, graphene, and carbon nanofibers.

In some embodiments of this application, the negative electrode film active material layer further optionally includes other adjuvants such as a thickener (for example, sodium carboxymethyl cellulose (CMC-Na)).

In some embodiments, the negative electrode plate may be manufactured by: dispersing the foregoing components for manufacturing the negative electrode plate, for example, the negative electrode active material, the conductive agent, the binder, and any other components, in a solvent (for example, deionized water) to form a negative electrode slurry; coating the negative electrode slurry on the negative electrode current collector, followed by drying, cold pressing, and other procedures, to obtain the negative electrode current collector including the negative electrode active material layer; and performing perforation processing in an edge region that is of the negative electrode current collector and on which the slurry is not coated, arranging the connecting member 5212c in the edge region, and then forming a plurality of tabs 5212a and a plurality of connecting members 5212c through cutting, where a tensile strength of the connecting member 5212c is less than a tensile strength of the negative electrode current collector.

In the embodiments of this application, the battery cell usually further includes an electrolyte, and the electrolyte serves to conduct ions between the positive electrode plate and the negative electrode plate. A type of the electrolyte is not specifically limited in this application, and may be selected as required. For example, the electrolyte may be in a liquid, gel, or full solid state.

In some embodiments of this application, the electrolyte includes an electrolytic solution, and the electrolytic solution includes an electrolyte salt and a solvent.

In some embodiments of this application, the electrolyte salt may include one or more of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato) borate, lithium bis(oxalate)borate, lithium difluoro bis(oxalato)phosphate, and lithium tetrafluoro(oxalato)phosphate.

In some embodiments of this application, the solvent may include one or more of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone, and diethyl sulfone.

In some embodiments of this application, the electrolyte further optionally includes an additive. For example, the additive may include a negative electrode film forming additive and a positive electrode film forming additive, and may further include an additive that can improve the performance of the battery, for example, an additive that improves the overcharging performance of the battery or an additive that improves the high or low temperature performance of the battery.

In some embodiments of this application, the battery cell further includes a separator. There is no special limitation on a type of the separator in this application, and any well-known porous structure separator with good chemical and mechanical stability may be selected.

In some embodiments of this application, a material of the separator may be selected from at least one of a glass fiber, a non-woven fabric, polyethylene, polypropylene, and polyvinylidene fluoride. The separator may be a single-layer thin film or a multi-layer composite thin film. There is no special limitation. When the separator is the multi-layer composite thin film, a material of each layer may be identical or different. There is no special limitation.

In some embodiments of this application, an electrode assembly may be formed by using the positive electrode plate, the negative electrode plate, and the separator through a winding process or a stacking process.

In some embodiments of this application, the battery cell may include an outer packaging. The outer packaging may be used for packaging the foregoing electrode assembly and the electrolyte.

In some embodiments of this application, the outer packaging of the battery cell may be a hard case, for example, a hard plastic case, an aluminum case, or a steel case. Alternatively, the outer packaging of the battery cell may be a soft pack, for example, a pouch-type soft pack. A material of the soft pack may be plastic, and examples of the plastic may include polypropylene, polybutylene terephthalate, polybutylene succinate, and the like.

A shape of the battery cell is not particularly limited in this application, and may be a cylinder, a square, or in any other shape. For example, FIG. 3 shows a battery cell 5 of a square structure as an example.

In some embodiments of this application, referring to FIG. 4, the outer packaging may include a housing 51 and a cover plate 53. The housing 51 may include a bottom plate and a side plate connected to the bottom plate. The bottom plate and the side plate enclose an accommodating cavity. The housing 51 is provided with an opening in communication with the accommodating cavity, and the cover plate 53 can cover the opening to close the accommodating cavity. The positive electrode plate, the negative electrode plate, and the separator may form an electrode assembly 52 through a winding process or a stacking process. The electrode assembly 52 is packaged in the accommodating cavity. The electrolyte infiltrates the electrode assembly 52. The battery cell 5 may include one or more electrode assemblies 52, which may be selected by a person skilled in the art according to an actual requirement.

## Manufacturing method for a battery cell

According to a second aspect, this application provides a manufacturing method for the battery cell according to the first aspect of this application. The manufacturing method includes the following steps.

S1: Provide a current collector.

S2: Open a plurality of through holes in an edge region of the current collector at intervals, arrange a connecting member on at least one side of the edge region, and then form a plurality of tabs and a plurality of connecting members through cutting to obtain an electrode plate, where a tensile strength of the connecting member is less than or equal to a tensile strength of the current collector.

S3: Wind or stack the electrode plate to form a tab assembly.

S4: Connect an adapter component to the plurality of connecting members through the through holes and perform assembly, to obtain the battery cell.

According to the manufacturing method for a battery cell provided in this application, the manufacturing method can reduce the difficulty of connection between tabs, and can further reduce the occurrence of cracking caused by the connection between the tabs, thereby improving the manufacturing yield and production output of batteries.

In some embodiments of this application, the providing a current collector in S1 includes the following steps.

S11: Prepare a slurry of the electrode plate: dispersing an active material, a conductive agent, a binder, and any other components in a solvent (for example, deionized water) to form the slurry.

S12: Coat the slurry on a coating region of the current collector, followed by drying, cold pressing, and other procedures, to obtain the current collector including an active material layer.

In the foregoing embodiments, the plurality of through holes are opened at intervals in the edge region that is of the current collector and on which the active material layer is not coated, and the connecting member may be arranged in the edge region through a suitable process, to improve the reliability of the connection between the connecting member and the tab and the manufacturing efficiency of a battery.

In some embodiments of this application, the connecting member is connected to at least one side of each of the tabs through roller welding. The connecting member is welded to the at least one side of the tab through roller welding, which can help improve the reliability of the connection between the connecting member and the tab, and also help improve the manufacturing efficiency of batteries.

In some embodiments of this application, the adapter component is connected to the plurality of connecting members through ultrasonic welding. The ultrasonic welding can help electrically connect the adapter component to the plurality of connecting members in a thickness direction, and can further reduce a probability that the adapter component is separated from the connecting members.

In some embodiments of this application, S3 includes the following steps.

Form the tab assembly by using a positive electrode plate, a negative electrode plate, and a separator through a winding process or a stacking process. Through holes of two adjacent tabs are in communication with each other, and at least one of the positive electrode plate and the negative electrode plate is the electrode plate.

## Battery

According to a third aspect, this application provides a battery, including the battery cell according to the first aspect of this application or the battery cell manufactured using the manufacturing method according to the second aspect of this application.

It may be understood that the battery may be a battery module or a battery pack. This is not specifically limited in the embodiments of this application.

In some embodiments of this application, the battery cell may be assembled into a battery module. The battery module may include one or more battery cells, and a specific quantity of battery cells may be selected by a person skilled in the art depending on the application and capacity of the battery module.

FIG. 5 shows a battery module 4 as an example. Referring to FIG. 5, in the battery module 4, a plurality of battery cells 5 may be arranged in sequence in a length direction of the battery module 4. Certainly, the plurality of battery cells 5 may alternatively be arranged in any other manner. Further, the plurality of battery cells 5 may be fixed by fasteners.

Optionally, the battery module 4 may further include a case with an accommodating space, and the plurality of battery cells 5 are accommodated in the accommodating space.

In some embodiments of this application, the battery module 4 may be further assembled into a battery pack, the battery pack may include one or more battery modules 4, and a specific quantity may be selected by a person skilled in the art based on the application and capacity of the battery pack.

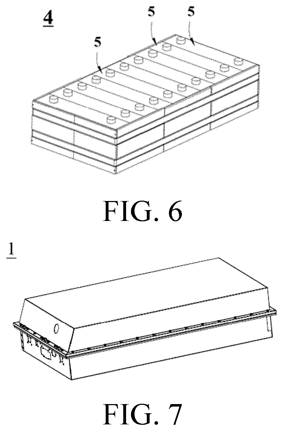

FIG. 6 and FIG. 7 show a battery pack 1 as an example. Referring to FIG. 6 and FIG. 7, the battery pack 1 may include a battery box and a plurality of battery modules 4 arranged in the battery box. The battery box includes an upper box 2 and a lower box 3. The upper box 2 can cover the lower box 3, to form a closed space for accommodating the battery module 4. A plurality of battery modules 4 may be arranged in the battery box in any manner.

**Power consuming apparatus**

According to a fourth aspect, this application further provides a power consuming apparatus. The power consuming apparatus includes the battery according to the third aspect of this application. The battery may include one or more of the battery cell, the battery module, or the battery pack provided in the three aspects of this application. The battery cell, the battery module, or the battery pack may be used as a power source for the power consuming apparatus, or an energy storage unit of the power consuming apparatus. The power consuming apparatus may include, but is not limited to, a mobile device (for example, a mobile phone and a notebook computer), an electric vehicle (for example, an all-electric vehicle, a hybrid electric vehicle, a plug-in hybrid electric vehicle, an electric bicycle, an electric scooter, an electric golf cart, and an electric truck), an electric train, a ship, a satellite, an energy storage system, and the like.

For the power consuming apparatus, the battery cell, the battery module, or the battery pack may be selected according to use requirements thereof.

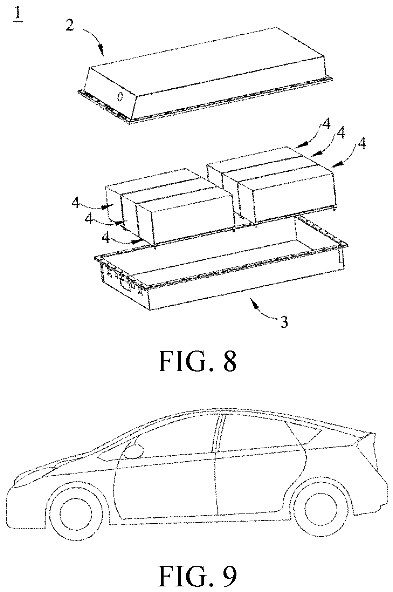

FIG. 8 shows a power consuming apparatus as an example. The power consuming apparatus is an all-electric vehicle, a hybrid electric vehicle, a plug-in hybrid electric vehicle, or the like. In order to meet the requirements of the power consuming apparatus for high power and high energy density of secondary batteries, a battery pack or a battery module may be used.

As another example, the apparatus may be a mobile phone, a tablet computer, a notebook computer, or the like. The apparatus usually needs to be light and thin, and the battery cell may be used as a power source.

The embodiments described below are exemplary, and are only intended to explain this application rather than being construed as a limitation to this application. The embodiments in which specific technologies or conditions are not indicated shall be carried out in accordance with the technologies or conditions described in the literature in the art or in accordance with the product specification. The reagents or instruments for which no manufacturers are noted are all common products commercially available from the market.

Example 1

Manufacturing of a positive electrode plate

A positive electrode active material of lithium iron phosphate, a conductive agent (SP), and a binder (PVDF) were added into an NMP solvent at a mass ratio (96.5:1:2.5) and uniformly mixed, to obtain a positive electrode slurry.

The positive electrode slurry was coated on an aluminum foil with a thickness of 13 $\mu$m, followed by drying, cold pressing, and other procedures, to obtain the positive electrode plate.

Manufacturing of a negative electrode plate

A negative electrode active material (graphite+SiOx = 7.5:2.5), a thickener (CMC), a conductive agent (SP), and a binder (SBR) were added into deionized water at a mass ratio (94:1.1:1:3.9) and uniformly mixed, to obtain a negative electrode slurry.

The negative electrode slurry was coated on a nickel-iron alloy with a thickness of 6 $\mu$m (a ratio of Ni to Fe in the nickel-iron alloy is 1:1), followed by drying, cold pressing, and other procedures, to obtain the negative electrode plate including a negative electrode active material layer.

Perforation processing was performed in an edge region of a negative electrode current collector, to form through holes in tabs, where an area of the through hole is 150 mm$^2$.

A copper foil with a thickness of 6 $\mu$m was welded to the edge region by using a roller welding process, the through holes were covered by the copper foil, and a plurality of tabs and a plurality of copper foil blocks were formed through die cutting, to obtain the negative electrode plate.

Manufacturing of a separator

A PE separator with a thickness of 9 $\mu$m was used.

Manufacturing of an electrolyte

After EC and DEC were mixed at EC:EDC (3:7), LiPF$_6$ with a concentration of 1 mol/L was added into a mixed solution, to obtain an electrolytic solution.

Manufacturing of a lithium-ion battery

The positive electrode plate, the separator, and the negative electrode plate were wound in sequence to form an electrode assembly, where a quantity of layers of tabs is 14. A copper metal foil and an aluminum metal foil were ultrasonically welded to connecting members in a tab assembly through through holes, where an area of a welding mark is 100 mm$^2$ (a contact area S4). The electrode assembly was placed in an outer packaging, which was injected with the electrolytic solution and sealed to obtain the lithium-ion battery.

Example 2 to example 5

A manufacturing method is similar to the manufacturing method in Example 1, and differences lie in parameters related to the current collector and the tab assembly, for example, a material and a tensile strength of the current collector and a material of the connecting member.

Comparative Example 1 to Comparative Example 3

A manufacturing method is similar to the manufacturing method in Example 1, and differences lie in parameters related to the current collector and the tab assembly.

Testing

(1) DCR Test

For the DCR, according to a conventional HPPC procedure, an ambient temperature of 25°C was kept, charging and discharging were performed at a rate of 0.33 C for 3 cls, a capacity of the 3$^{rd}$ cl was selected as a standard capacity C0, discharging was performed at 4C0 for 30 s after charging was performed to 50% SOC, and a voltage difference before and after discharging was recorded, where DCR = a voltage difference/a current.

(2) Welding pull force test

After welding was performed, the adapter component was clamped at one end of a tensile machine, the current collector was clamped at one end of the tensile machine, and a magnitude of a force after a welding mark was completely pulled apart was recorded at a speed of 50 mm/min.

3. Capacity retention rate test

At 25°C, after charging and discharging were performed at 0.5 C/0.5 C for 100 cls, a ratio of a capacity to an initial capacity, that is, a capacity retention ratio was obtained.

Related parameters and test results of a negative electrode plate in Example 1 to Example 5 and Comparative Example 1 to Comparative Example 3 are respectively listed in Table 1.

Table 1

| Number | Negative electrode current collector | | Connecting member | | DCR mΩ | Welding pull force | Elongation | Capacity retention rate after 100 cls |
|---|---|---|---|---|---|---|---|---|
| | Material | Tensile strength | Material | Tensile strength | | | | |
| Example 1 | Nickel-iron alloy | 719 MPa | Copper foil of 6 μm | 307 MPa | 167.2 | 28.3 N | 0.6% | 86.7% |
| Example 2 | Stainless steel | 810 MPa | Copper foil of 6 μm | 307 MPa | 186.6 | 26.4 N | 0.4% | 87.2% |
| Example 3 | Nickel-iron alloy | 719 MPa | Copper foil of 8 μm | 307 MPa | 139.2 | 33.5 N | 0.6% | 87.3% |

(continued)

| Number | Negative electrode current collector | | Connecting member | | DCR mΩ | Welding pull force | Elongation | Capacity retention rate after 100 cls |
|---|---|---|---|---|---|---|---|---|
| | Material | Tensile strength | Material | Tensile strength | | | | |
| Example 4 | Nickel-iron alloy | 719 MPa | Nickle foil of 6 μm | 495 MPa | 290.5 | 11.7 N | 0.6% | 85.8% |
| Example 5 | Nickel-iron alloy | 719 MPa | Copper foil of 6 μm | 307 MPa | 140.7 | 31.2 N | 0.6% | 87.0% |
| Comparative Example 1 | Copper foil | 307 MPa | / | / | 145.5 | 27.2 N | 1.9% | 83.2% |
| Comparative Example 2 | Nickel-iron alloy | 719 MPa | / | / | 432.7 | 3.5 N | 0.7% | 75.6% |
| Comparative Example 3 | Stainless steel | 810 MPa | / | / | Weak welding | | | |

It can be learned from Table 1 that the connecting member is arranged on the at least one side of the tab, and the tensile strength of the connecting member is less than the tensile strength of the current collector. Therefore, the adapter component is connected to the plurality of connecting members through the through holes of the tabs, so that the reliability of the connection between the adapter component and the connecting members can be improved and a probability that the tab assembly cracks can be reduced, thereby improving the manufacturing yield of batteries.

It should be noted that this application is not limited to the above embodiments. The above embodiments are merely exemplary, and embodiments having substantially the same technical idea and the same effects within the scope of the technical solutions of this application are all included in the technical scope of this application. In addition, without departing from the scope of the subject matter of this application, various modifications that can be conceived by those skilled in the art are applied to the embodiments, and other modes constructed by combining some of the constituent elements of the embodiments are also included in the scope of this application.

**Claims**

1.  A battery cell, comprising:

    an electrode plate, wherein the electrode plate comprises a current collector and a tab assembly, the tab assembly comprises a plurality of tabs and a plurality of connecting members, the plurality of tabs are stacked in a first direction and are connected to the current collector, each of the tabs is provided with a through hole in the first direction, each of the connecting members is arranged on at least one side of the tab, and a tensile strength of the connecting member is less than a tensile strength of the current collector; and
    an adapter component, wherein the adapter component is connected to the plurality of connecting members through the through holes.

2.  The battery cell according to claim 1, wherein the current collector meets at least one of the following features:

    (I) the tensile strength of the current collector ranges from 450 MPa to 1500 MPa, and optionally ranges from 500 MPa to 800 MPa;
    (II) an elongation at break of the current collector is less than or equal to 2%, and optionally ranges from 0.4% to 1.9%;
    (III) a resistivity R1 of the current collector ranges from $1*10^{-3}$ Ω/m to $4.5*10^{-3}$ Ω/m; and
    (IV) a thickness d1 of the current collector ranges from 5 μm to 20 μm.

3.  The battery cell according to claim 1 or 2, wherein the connecting member meets at least one of the following features:

(I) the tensile strength of the connecting member ranges from 150 MPa to 400 MPa;

(II) an elongation at break of the connecting member ranges from 2% to 10%;

(III) a material of the connecting member comprises one or more of aluminum, nickel, and copper;

(IV) a resistivity R2 of the connecting member ranges from $0.1*10^{-3}$ $\Omega$/m to $2*10^{-3}$ $\Omega$/m; and

(V) a thickness d2 of the connecting member ranges from 3 $\mu$m to 15 $\mu$m.

4. The battery cell according to any one of claims 1 to 3, wherein the electrode plate further comprises an active material layer arranged on at least one side of the current collector, and a distance between the connecting member and the active material layer in a width direction of the current collector ranges from 3 mm to 10 mm.

5. The battery cell according to claim 4, wherein a distance between the connecting member and an end of the tab away from the active material layer is less than or equal to 5 mm.

6. The battery cell according to any one of claims 1 to 5, wherein an area S1 of the connecting member, an area S2 of the tab, an area S3 of the through hole, and a contact area S4 between the adapter component and the connecting members satisfy: S4 < S3 < S1 < S2.

7. The battery cell according to claim 6, wherein an area difference S5 between an area of an overlapping part between the connecting member and the tab and the area S3 of the through hole, the connecting member, the tab, and the contact area S4 between the adapter component and the connecting member satisfy: S4 * d1 * R1/(d2 * R2 + d1 * R1) < S5 < S1, wherein d1 represents a thickness of the connecting member, in $\mu$m; R1 represents a resistance of the connecting member, in m$\Omega$; d2 represents a thickness of the tab, in $\mu$m; and R2 represents a resistance of the tab, in m$\Omega$.

8. A manufacturing method for the battery cell according to any one of claims 1 to 7, comprising:

   providing a current collector;

   opening a plurality of through holes in an edge region of the current collector at intervals, arranging a connecting member on at least one side of the edge region, and then forming a plurality of tabs and a plurality of connecting members through cutting to obtain an electrode plate, wherein a tensile strength of each of the connecting members is less than a tensile strength of the current collector;

   winding or stacking the electrode plate to form a tab assembly; and

   connecting an adapter component to the plurality of connecting members through the through holes and performing assembly, to obtain the battery cell.

9. The manufacturing method according to claim 8, wherein the connecting member is connected to at least one side of each of the tabs through roller welding.

10. The manufacturing method according to claim 8 or 9, wherein the adapter component is connected to the plurality of connecting members through ultrasonic welding.

11. A battery, comprising the battery cell according to any one of claims 1 to 7 or the battery cell manufactured using the manufacturing method according to any one of claims 8 to 10.

12. A power consuming apparatus, comprising the battery according to claim 11.

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
|---|
| **PCT/CN2023/083000** |

### A. CLASSIFICATION OF SUBJECT MATTER

H01M50/531(2021.01)i; H01M50/533(2021.01)n; H01M50/534(2021.01)n; H01M50/536(2021.01)n

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 电极, 极片, 集流, 集电, 极耳, 空白, 未涂, 引线, 接片, 转接, 拉伸, 抗拉, 抗张, 断裂, 力学, 拉断, 机械, 强度, mpa, cell, electrode, collector, ear, tab, blank, uncoated, lead, tensile, break, mechanical, stretch, strength

### C. DOCUMENTS CONSIDERED TO BE RELEVANT

| Category* | Citation of document, with indication, where appropriate, of the relevant passages | Relevant to claim No. |
|---|---|---|
| A | CN 115763694 A (DONGGUAN VEKEN BATTERY CO., LTD.) 07 March 2023 (2023-03-07) <br> description, paragraphs 35-95, and figures 1-4 | 1-12 |
| A | CN 108695480 A (FORD GLOBAL TECHNOLOGIES, LLC) 23 October 2018 (2018-10-23) <br> entire document | 1-12 |
| A | CN 108777308 A (CHINA AVIATION LITHIUM BATTERY (LUOYANG) CO., LTD. et al.) 09 November 2018 (2018-11-09) <br> entire document | 1-12 |
| A | CN 112968179 A (ZHUHAI COSMX BATTERY CO., LTD.) 15 June 2021 (2021-06-15) <br> entire document | 1-12 |
| A | CN 1732579 A (FUJI HEAVY INDUSTRIES LTD.) 08 February 2006 (2006-02-08) <br> entire document | 1-12 |
| A | JP 2000243374 A (HITACHI MAXELL K. K.) 08 September 2000 (2000-09-08) <br> entire document | 1-12 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 November 2023** | **24 November 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/083000** |

| C. | DOCUMENTS CONSIDERED TO BE RELEVANT | |
|---|---|---|
| Category* | Citation of document, with indication, where appropriate, of the relevant passages | Relevant to claim No. |
| A | US 2001019797 A1 (SONY CORP.) 06 September 2001 (2001-09-06)<br>entire document | 1-12 |
| A | WO 2013191218 A1 (TOYOTA JIDOSHA K.K. et al.) 27 December 2013 (2013-12-27)<br>entire document | 1-12 |

Form PCT/ISA/210 (second sheet) (July 2022)

# EP 4 636 937 A1

## INTERNATIONAL SEARCH REPORT
### Information on patent family members

| International application No. |
| --- |
| **PCT/CN2023/083000** |

| Patent document cited in search report | | | Publication date (day/month/year) | Patent family member(s) | | | Publication date (day/month/year) |
| --- | --- | --- | --- | --- | --- | --- | --- |
| CN | 115763694 | A | 07 March 2023 | None | | | |
| CN | 108695480 | A | 23 October 2018 | DE | 102018107321 | A1 | 04 October 2018 |
| | | | | US | 2018287316 | A1 | 04 October 2018 |
| | | | | US | 10640876 | B2 | 05 May 2020 |
| CN | 108777308 | A | 09 November 2018 | None | | | |
| CN | 112968179 | A | 15 June 2021 | None | | | |
| CN | 1732579 | A | 08 February 2006 | AU | 2003292614 | A1 | 22 July 2004 |
| | | | | WO | 2004059760 | A1 | 15 July 2004 |
| | | | | US | 2006115723 | A1 | 01 June 2006 |
| | | | | EP | 1592077 | A1 | 02 November 2005 |
| | | | | EP | 1592077 | A4 | 28 April 2010 |
| | | | | JPWO | 2004059760 | A1 | 11 May 2006 |
| | | | | JP | 4616005 | B2 | 19 January 2011 |
| | | | | CN | 1331249 | C | 08 August 2007 |
| JP | 2000243374 | A | 08 September 2000 | None | | | |
| US | 2001019797 | A1 | 06 September 2001 | US | 7384705 | B2 | 10 June 2008 |
| | | | | NO | 20010857 | L | 24 August 2001 |
| | | | | EP | 1128450 | A2 | 29 August 2001 |
| | | | | EP | 1128450 | A3 | 06 May 2004 |
| | | | | EP | 1128450 | B1 | 16 February 2011 |
| | | | | KR | 20010085540 | A | 07 September 2001 |
| | | | | KR | 100853628 | B1 | 25 August 2008 |
| | | | | DE | 60144037 | D1 | 31 March 2011 |
| | | | | TW | 499767 | B | 21 August 2002 |
| | | | | JP | 2001236947 | A | 31 August 2001 |
| | | | | JP | 4644899 | B2 | 09 March 2011 |
| | | | | CN | 1313643 | A | 19 September 2001 |
| WO | 2013191218 | A1 | 27 December 2013 | JP | 2014000594 | A | 09 January 2014 |
| | | | | JP | 5876380 | B2 | 02 March 2016 |

Form PCT/ISA/210 (patent family annex) (July 2022)

23